# EUROPEAN PATENT SPECIFICATION

(11) **EP 4 023 582 B1**
(45) Date of publication and mention of the grant of the patent: **28.10.2026**
(21) Application number: 21150131.7
(22) Date of filing: 05.01.2021
(51) Int. Cl.: B66B 13/14

(54) **A DOOR SENSOR UNIT AND A METHOD FOR DETERMINING A TYPE OF A DOOR**
TÜRSENSOREINHEIT UND VERFAHREN ZUR BESTIMMUNG EINES TÜRTYPS
UNITÉ DE CAPTEUR DE PORTE ET PROCÉDÉ DE DÉTERMINATION D'UN TYPE DE PORTE

(43) Date of publication of application: 06.07.2022
(73) Proprietor: KONE Corporation, 00330 Helsinki (FI)
(72) Inventor: LAAKSO, Matti, 00330 HELSINKI (FI); MUSTONEN, Matti, 00330 HELSINKI (FI)
(74) Representative: Berggren Oy

(56) References cited:
- ES-T3- 2 355 433
- JP-A- 2017 105 578
- US-A1- 2020 239 270

## Description

### TECHNICAL FIELD

The invention concerns in general the technical field of doors. Especially the invention concerns monitoring of doors.

### BACKGROUND

Elevators and buildings may have different type of doors. Some examples of the different types of doors may be horizontally moving doors, vertically moving doors, swing doors, folding doors, etc.. Typically, the elevators have landing doors on each landing and a car door on the elevator car. The doors of the elevators are typically horizontally moving automatic doors. The horizontally moving automatic doors of the elevators may be either center, left or right opening. Alternatively or in addition, for example the landing doors of the elevators may be swing doors and/or the car doors of the elevators may be folding doors. Moreover, elevator, especially elevators intended for conveying freight, may have vertically moving doors.

A sensor-based condition monitoring, preferably remote monitoring, may be applied to any type doors. Typically, the condition monitoring of the doors may be based on accelerometer-based sensor solutions. In swing doors also gyroscope-based sensor solutions may be used. In order to be able to monitor the condition of the door it may be necessary to identify when the door is opening and when the door is closing. In the accelerometer-based sensor solutions the identification of the door opening and closing typically comprises using a model, e.g. an algorithm, for detecting the direction of the movement of the door, e.g. direction of the acceleration of the door.

Because the motion of each type of door is different, the model for detecting the direction of the movement of the door is specific for each door type. Thus, the door sensors are typically tailored for each door type by using the door type specific model. Even though the model may be made substantially generic with respect to door size and speed, the direction of the movement needs to be defined by using the door type specific model.

Thus, there is need to develop further solutions for sensor-based condition monitoring of doors.

A patent publication JP 2017 105578 A discloses a solution, wherein a sensor device is installed in a periphery of a door. The sensor device includes imaging means, image recognition means, and parameter adjustment means. The imaging means continuously images within an imaging area. The image recognition means executes image recognition processing on an image imaged by the imaging means. The parameter adjustment means changes a predetermined parameter in accordance with detected parameter adjustment information when the parameter adjustment information for adjusting the predetermined parameter unique to the sensor device is detected as a result of the image recognition processing by the image recognition means.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a door sensor unit and a method for determining a type of a door. Another objective of the invention is that the door sensor unit and the method for determining a type of a door enables monitoring of different type of doors.

The objectives of the invention are reached by a door sensor unit and a method as defined by the respective independent claims.

According to a first aspect, a door sensor unit for determining a type of a door to which the door sensor unit is attached is provided, wherein the door sensor unit is configured to: obtain movement data representing movement of the door during a learning period, and determine the type of the door based on the obtained movement data, the type of the door comprises a high-level type of the door and sub-level type of the door, wherein the high-level type of the door is an elevator car door or a building/landing door, and wherein the sub-level type of the door is a horizontally moving door, a vertically moving door, a swing door, or a folding door, wherein the determination of the type of the door comprises a first determination phase and a second determination phase, wherein the first determination phase comprises that the door sensor unit is configured to: input the obtained movement data into a plurality of door type specific models to generate a movement pattern of each of the plurality of door type specific model, compare the generated movement pattern of each of the plurality of door type specific model to predefined movement patterns of the door, rate the movement patterns of the plurality of door type specific models based on the comparison, and select a group of door type specific models based on the ratings of the movement patterns of the plurality of door type specific models.

The predetermined movement patterns may comprise a plurality of elevator car door movement patterns representing movement of an elevator car followed by opening and closing movement of the door or opening and closing movement of the door followed by movement of an elevator car and a plurality of building/landing door movement patterns representing opening and closing movement of the door.

Alternatively or in addition, the second determination phase may comprise that the door sensor unit is configured to: detect one or more directions of the movement representing movement of the door in each movement pattern of the selected group of door type specific models, select a winning door type specific model, and determine the type of the door based on the detected one or more directions of the movement of movement pattern of the of the winning door type specific model.

In response to detection of: only vertical direction, the type of the door may be determined to be a vertically moving door; only horizontal direction, the type of the door may be determined to be a horizontally moving door; direction normal to a vertical plane, the type of the door may be determined to be a swing door; or horizontal direction and direction normal to a vertical plane, the type of the door may be determined to be a folding door.

Alternatively or in addition, the learning period may comprise at least one movement cycle, wherein in case of an elevator car door one movement cycle may comprise movement of an elevator car followed by opening and closing movement of the door or opening and closing movement of the door followed by movement of an elevator car, and in case of a building/landing door one movement cycle may comprise opening and closing movement of the door.

Alternatively or in addition, the door sensor unit may comprise an accelerometer configured to obtain the movement data of the door, wherein the movement data may be three-dimensional acceleration of the door.

According to a second aspect, a method for determining a type of a door is provided, wherein the method comprises: obtaining movement data representing movement of the door during a learning period, and determining the type of the door based on the obtained movement data, the type of the door comprises a high-level type of the door and sub-level type of the door, wherein the high-level type of the door is an elevator car door or a building/landing door, and wherein the sub-level type of the door is a horizontally moving door, a vertically moving door, a swing door, or a folding door, wherein the step of determining the type of the door comprises a first determination phase and a second determination phase, wherein the first determination phase comprises: inputting the obtained movement data into a plurality of door type specific models to generate a movement pattern of each of the plurality of door type specific model, comparing the generated movement pattern of each of the plurality of door type specific model to predefined movement patterns of the door, rating the movement patterns of the plurality of door type specific models based on the comparison, and selecting a group of door type specific models based on the ratings of the movement patterns of the plurality of door type specific models.

The predetermined movement patterns may comprise a plurality of elevator car door movement patterns representing movement of an elevator car followed by opening and closing movement of the door or opening and closing movement of the door followed by movement of an elevator car and a plurality of building/landing door movement patterns representing opening and closing movement of the door.

Alternatively or in addition, the second determination phase may comprise: detecting one or more directions of the movement representing movement of the door in the movement patterns of the selected group of door type specific models, selecting a winning door type specific model, and determining the type of the door based on the detected one or more directions of the movement of movement pattern of the of the winning door type specific model.

In response to detection of: only vertical direction, the type of the door may be determined to be a vertically moving door; only horizontal direction, the type of **the door** may be determined to be a horizontally moving door; direction normal to a vertical plane, the type of the door may be determined to be a swing door; or horizontal direction and direction normal to a vertical plane, the type of the door may be determined to be a folding door.

Alternatively or in addition, the learning period may comprise at least one movement cycle, wherein in case of an elevator car door one movement cycle may comprise movement of an elevator car followed by opening and closing movement of the door or opening and closing movement of the door followed by movement of an elevator car and in case of a building/landing door one movement cycle may comprise opening and closing movement of the door in case of a building/landing door.

Alternatively or in addition, the movement data may be three-dimensional acceleration of the door obtained by an accelerometer.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figures 1A-1D illustrate schematically examples of a door sensor unit according to the invention.
Figure 2 illustrates schematically an example of components of a door sensor unit according to the invention.
Figure 3 illustrates schematically an example of a method according to the invention.
Figures 4-6 illustrate schematically more detailed examples of the method according to the invention.

### DESCRIPTION OF THE EXEMPLIFYING EMBODIMENTS

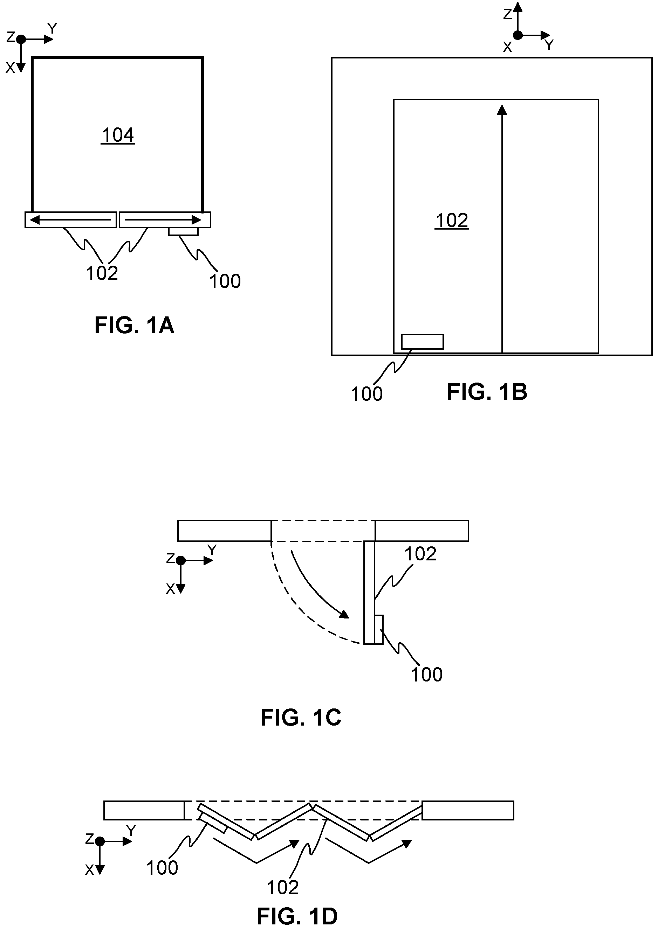

Figures 1A-1D illustrate schematically examples of a door sensor unit 100 according to the invention arranged to different type of doors 102. Figures 1A, 1C, and 1D illustrate a top view of the door 102 to which the door sensor unit 100 is arranged and Figure 1B illustrates a front view of the door 102 to which the door sensor unit 100 is arranged. In Figures 1A-1D the direction of the Y-axis is the horizontal direction, the direction of the Z-axis is the vertical direction, and the direction of X-axis is the direction normal, i.e. perpendicular, to the vertical plane, i.e. YZ-plane. The door sensor unit 100 may be arranged, i.e. attached or mounted, to any part of the door 102 which is moving along with the door 102, when the door 102 is opening and closing. According to a non-limiting example, the door sensor unit 100 may be arranged to a door panel, i.e. door leaf, of the door 102. Some non-limiting examples to arrange, i.e. to attach or mount, the door sensor unit 100 to the door 102 may comprise for example a double-sided tape, a magnet-based attachment, or any other known attachment means suitable for arranging the door sensor unit 100 to the door 102. Figures 1A-1D illustrate some non-limiting example locations to which the door sensor unit 100 according to invention may be arranged. The door sensor unit 100 according to the invention is configured to determine the type of the door 102 to which the door sensor unit 100 is attached. The door sensor unit 100 according to the invention may determine a high-level type of the door 102, i.e. equipment-based type of the door 102, and a sub-level type of the door 102, i.e. a detailed type of the door 102. In other words, the door sensor unit 100 may first determine the high-level type of the door 102 and after the determination of the high-level type 102 the door sensor unit 100 may determine the sub-level type of the door 102. The high-level type of the door 102 is an elevator car door or a building/landing door. The sub-level type of the door 102 is a horizontally moving door (either center opening, left opening, or right opening), a vertically moving door, a swing door, or a folding door. Figure 1A illustrates a non-limiting example of an elevator car door 102, i.e. a door 102 of an elevator car 104, to which the door sensor unit 100 according to the invention may be arranged. The elevator car door 102 of the example of Figure 1A is a horizontally moving door (the arrows in Figure 1A illustrate the opening direction of the door panels of the door 102). More specifically, the elevator car door 102 of the example of Figure 1A is a center opening horizontally moving elevator car door 102. Figure 1B illustrates a non-limiting example of a building/landing door 102 to which the door sensor unit 100 according to the invention may be arranged. The building/landing door 102 of the example of Figure 1B is a vertically moving landing door (the arrow in Figure 1B illustrates the opening direction of the door 102). Figure 1C illustrates a non-limiting example of a building/landing door to which the door sensor unit 100 according to the invention may be arranged. The building/landing door 102 of the example of Figure 1C is a swing door (the arrow in Figure 1C illustrates the opening direction of the door 102). Figure 1D illustrates a non-limiting example of a building/landing door to which the door sensor unit 100 according to the invention may be arranged. The building/landing door 102 of the example of Figure 1D is a folding door (the arrows in Figure 1D illustrate the opening direction of the door panels of the door 102). In the example of Figure 1D a single sided folding door is illustrated, but the door 102 may also be a double-sided folding door.

The door sensor unit 100 according to the invention is configured to obtain movement data representing movement of the door 102 during a learning period. The movement data may be e.g. an acceleration of the door 102 and/or a speed of the door 102. The door sensor unit 100 may comprise an accelerometer 250 configured to obtaining the movement data of the door 102. Preferably the accelerometer 250 may be a three-axis accelerometer configured to obtain movement data, wherein the movement data is three-dimensional, i.e. three-axis, acceleration of the door 102. The learning period may comprise at least one movement cycle. Preferably the learning period comprises between 1 to 10 movement cycles. If the high-level type of the door 102 is the elevator car door one movement cycle may comprise movement of the elevator car 104 followed by opening and closing movement of the door 102 or opening and closing movement of the door 102 followed by a movement of the elevator car 104. Alternatively, if the high-level type of the door 102 is the building/landing door one movement cycle may comprise opening and closing movement of the door 102.

The door sensor unit 100 according to the invention is further configured to determine the type of the door 102 based on the obtained movement data. The determination of the type of the door 102 comprises a first determination phase and a second determination phase. As a result of the first determination phase the high-level type of the door 102 may be determined. As a result of the second determination phase the sub-level type of the door 102 may be determined. In other words, the first determination phase may comprise a determination of the high-level type of the door 102, i.e. whether the door 102 is an elevator door or a building/landing door, and the second determination phase may comprise a determination of the sub-level type of the door 102 may be determined, i.e. whether the door 102 is a horizontally moving door (either center opening, left opening, or right opening), a vertically moving door, a swing door, or a folding door.

The first determination phase, i.e. the determination of the high-level type of the door 102, comprises that the door sensor unit 100 is configured to input the obtained movement data into a plurality of door type specific models, i.e. algorithms, to generate a movement pattern of each of the plurality of door type specific model. In other words, the door sensor unit 100 is configured to use the obtained movement data as input data of each of the plurality of door type specific models and a movement pattern is generated as output data of each of the plurality of door type specific models. For example, a memory unit 220 of the door sensor unit 100 may be configured to store the plurality of door type specific models. The plurality of door type specific models may comprise a door type specific model for each type of the door 102, i.e. a plurality of door type specific models for the elevator car door and a plurality of door type specific models for the building/landing door. The plurality of door specific models for the elevator car door may comprise a door type specific model for each sub-level type elevator car door, e.g. a door type specific model of a center opening horizontally moving elevator car door, a door type specific model of a right opening horizontally moving elevator car door, a door type specific model of a left opening horizontally moving elevator car door, a door type specific model of a vertically moving elevator car door, a door type specific model of a swing elevator car door, and/or a door type specific model of a folding elevator car door. The plurality of door specific models for the building/landing door may comprise a door type specific model for each sub-level type building/landing door, e.g. a door type specific model of a center opening horizontally moving building/landing door, a door type specific model of a right opening horizontally moving building/landing door, a door type specific model of a left opening horizontally moving building/landing door, a door type specific model of a vertically moving building/landing door, a door type specific model of a swing building/landing door, and/or a door type specific model of a folding building/landing door.

The first determination phase further comprises that the door sensor unit 100 is configured to compare the generated movement pattern of each of the plurality of door type specific model to predefined movement patterns of the door 102. The predetermined movement patterns of the door 102 may comprise a plurality of predefined elevator car door movement patterns and a plurality of predefined building/landing door movement patterns. Each of the plurality of predefined elevator car door movement patterns represents a movement of the elevator car 104 followed by opening and closing movement of the door 102 or opening and closing movement of the door 102 followed by a movement of the elevator car 104. Each of the plurality of predefined building/landing door movement patterns represents opening and closing movement of the door 102. The plurality of predefined elevator car door movement patterns comprises a predefined movement pattern for each sub-level type elevator car door, e.g. a predefined movement pattern of a center opening horizontally moving elevator car door, a predefined movement pattern of a right opening horizontally moving elevator car door, a predefined movement pattern of a left opening horizontally moving elevator car door, a predefined movement pattern of a vertically moving elevator car door, a predefined movement pattern of a swing elevator car door, and/or a predefined movement pattern of a folding elevator car door. The plurality of predefined building/landing door movement patterns comprises a predefined movement pattern for each sub-level type building/landing door, e.g. a predefined movement pattern of a center opening horizontally moving building/landing door, a predefined movement pattern of a right opening horizontally moving building/landing door, a predefined movement pattern of a left opening horizontally moving building/landing door, a predefined movement pattern of a vertically moving building/landing door, a predefined movement pattern of a swing building/landing door, and/or a predefined movement pattern of a folding building/landing door.

The first determination phase further comprises that the door sensor unit 100 is configured to rate the generated movement patterns of the plurality of door type specific models based on the comparison. The rating of the generated movement patterns of the plurality of door type specific models may e.g. comprise rating the generated movement patterns of the plurality of door type specific models based on that how they match with, i.e. correspond to, the predefined movement patterns. The generated movement patterns of the door type specific models of different sub-types of the elevator car door may be considered to match substantially well with the predefined elevator car door movement patterns. Whereas the generated movement patterns of the door type specific models of different sub-types of the elevator car door may be considered to match substantially poorly with the predefined building/landing door movement patterns. Similarly, the generated movement patterns of the door type specific models of different sub-types of the building/landing door may be considered to match substantially well with the predefined building/landing door movement patterns. Whereas the generated movement patterns of the door type specific models of different sub-types of the building/landing door may be considered to match substantially poorly with the predefined elevator car door movement patterns.

The better a generated movement pattern matches with a predefined movement pattern, the higher rating said generated movement pattern may obtain, i.e. receive. In other words, the generated movement patterns of the door type specific models of the different sub-types of the elevator car door may obtain higher ratings when they are compared to the predefined elevator car door movement patterns than when they are compared to the predefined building/landing door movement patterns. Similarly, the generated movement patterns of the door type specific models of the different sub-types of the building/landing door may obtain higher ratings when they are compared to the predefined building/landing door movement patterns than when they are compared to the predefined elevator car door movement patterns. For example, if the door sensor unit 100 is arranged to an elevator car door, the generated movement patterns of door type specific models of the different sub-types of the elevator car door may be rated with a higher rating than the generated movements patterns of door type specific models of the different sub-types of the building/landing door. Alternatively, if the door sensor unit 100 is arranged to a building/landing door, the generated movement patterns of door type specific models of the different sub-types of the building/landing door may be rated with a higher rating than the generated movements patterns of door type specific models of the different sub-types of the elevator car door.

The first determination phase further comprises that the door sensor unit 100 is configured to select a group of door type specific models based on the ratings of the generated movement patterns of the plurality of door type specific models.

For example, if the door sensor unit 100 is arranged to an elevator car door, the door type specific models of the different sub-types of the elevator car door have higher rating than the door type specific models of the different sub-types of the building/landing door and thus the door type specific models of the different sub-types of the elevator car door may form the selected group of door type specific models. Alternatively, if the door sensor unit 100 is arranged to a building/landing door, the door type specific models of the different sub-types of the building/landing door have higher rating than the door type specific models of the different sub-types of the elevator car door and thus the door type specific models of the different sub-types of the building/landing door may form the selected group of door type specific models. In other words, the selected group determines the high-level type of the door 102. If the selected group comprises door type specific models of the different sub-types of the elevator car door, the high-level type of the door 102 may be determined to be the elevator door. Alternatively, if the selected group comprises door type specific models of the different sub-types of the building/landing door, the high-level type of the door may be determined to be the building/landing door.

The first determination phase may further comprise a determination of a direction the gravity. Alternatively, the second determination phase may comprise the determination of the direction of the gravity. The determination of the direction of the gravity may comprise observing by the door sensor unit 100 a long-term average of the obtained movement data, e.g. the acceleration of the door 102, or an instantaneous value of the obtained movement data, i.e. the acceleration of the door 102, when the door 102 is determined to be still, i.e. when the accelerometer noise level is low.

The second determination phase, which may be performed after the first determination phase, i.e. after the determination of the high-level type of the door 102, may comprise that the door sensor unit 100 is configured to detect one or more directions of the movement representing movement of the door 102 in each movement pattern of the selected group of the door type specific models. The detecting the one or more directions of the movement may comprise filtering the gravity out from the generated movement patterns of the selected group of the door type specific models. In addition, if the selected group comprises door type specific models of the different sub-types of the elevator car door, the detecting the one or more directions of the movement may comprise filtering the movement of the elevator car 104 out from the generated movement patterns of the selected group of the door type specific models. In other words, after filtering the gravity and the movement of the elevator car 104 out from the generated movement patterns of the selected group of the door type specific models, the remaining filtered movement patterns represents the opening and closing movement of the door 102 in the one or more directions depending on the door type specific model.

The second determination phase may further comprise that the door sensor unit 100 is configured to select a winning, i.e. an actual, door type specific model by comparing the filtered movement patterns of the selected group of the door type specific models to predefined movement patterns representing opening and closing movement of sub-level door types. The door type specific model whose filtered movement pattern corresponds to the predefined movement pattern representing opening and closing movement of one of the sub-level door type may be selected as the winning door type specific model, i.e. the door type specific model that corresponds to the sub-level type of the door 102 to which the door sensor unit 100 is arranged.

For example, in the predefined movement patterns of the horizontally opening door and the vertically opening door, when the door starts the opening movement, the movement of the door 102 accelerates to a certain speed, i.e. the speed of the door 102 changes from zero to a rated speed, which is driven during a predefined period of time before the movement of the door 102 starts to decelerate, preferably smoothly, into open position of the door 102. Similarly, in the predefined movement patterns of the horizontally opening door and the vertically opening door, when the door starts the closing movement, the movement of the door 102 accelerates to the certain speed, i.e. the door 102 speed changes from zero to the rated speed, which is driven during the predefined period of time prior to the movement of the door 102 starts to decelerate, preferably smoothly, into closed position of the door 102. The predefined movement patterns representing opening and closing movement of the swing door and folding door may typically be slightly more complicated, but the basic idea corresponds to the opening and closing movement of the horizontally and vertically opening doors. In the filtered movement patterns representing the opening and closing movement of the door 102, the acceleration of the door 102, i.e. the changes of the speed of the door 102, may be detected in different directions depending on the door type specific model. The filtered movement pattern in which the acceleration, i.e. changes of the speed of the door 102, follows, i.e. is similar to, the acceleration, i.e. changes of the speed of the door 102, of the predefined movement pattern of one of the sub-level door type may be selected as the winning door type specific model of the selected group.

In addition, according to an example in case that the selected group comprises door type specific models of the different sub-types of the elevator car door, the movement of the elevator car 104 may further be utilized in the selection of the winning door type specific model, e.g. to define that the elevator car door 102 is closed, if the elevator car 104 is moving, and/or that the movement following the movement of the elevator car 104 is opening of the elevator car door 102.

The second determination phase may further comprise that the door sensor unit 100 is configured to determine the type of the door 102, i.e. sub-level type of the door 102, based on the detected one or more directions of the movement of the winning door type specific model. In response to detection of only vertical direction movement, the type of the door 102, i.e. the sub-level type of the door 102, may be determined to be a vertically moving door. Alternatively, in response to detection of only horizontal direction movement, the type of the door 102, i.e. the sub-level type of the door 102, may be determined to be a horizontally moving door. Alternatively, in response to detection of movement having direction normal to a vertical plane, the type of the door 102, i.e. the sub-level type of the door 102, may be determined to be a swing door. Alternatively, in response to detection of horizontal direction movement and movement having direction normal to a vertical plane, the type of the door 102, i.e. the sub-level type of the door 102, may be determined to be a folding door.

The door sensor unit 100 may be configured to use, i.e. apply, for the subsequent operation after the learning period, e.g. for condition monitoring of the door 102, the door type specific model of the determined type of the door 102, i.e. the winning door type specific model. The capability of the door sensor unit 100 according to the invention to determine the type of the door 102 enables that the door sensor unit 100 according to invention may be arranged to all type doors for condition monitoring, preferably remote monitoring, of said door 102 regardless of the type of the door 102. In other words, the capability of the door sensor unit 100 to determine the type of the door 102 enables that the same door sensor unit 100 may be used for condition monitoring of different type of doors. Alternatively or in addition, the door sensor unit 100 according to the invention may adapt to different installation orientations based on the determined direction of the gravity. In other words, the door sensor unit 100 may be installed to the door 102 in any position irrespective of the installation orientation of the door sensor unit 100.

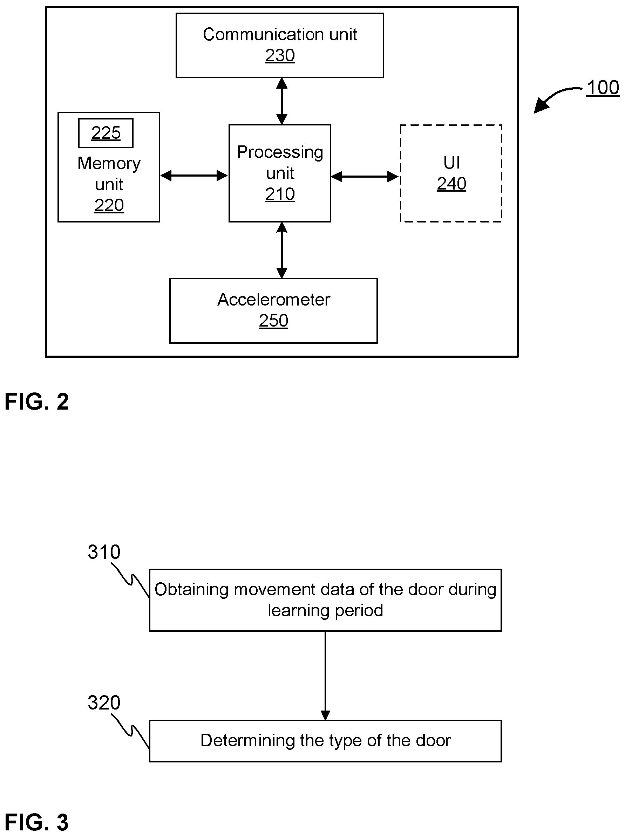

Figure 2 schematically illustrates an example of components of the door sensor unit 100 according to the invention. The door sensor unit 100 may comprise a processing unit 210 comprising one or more processors, a memory unit 220 comprising one or more memories, a communication unit 230 comprising one or more communication devices, possibly a user interface (UI) unit 240, and the accelerometer 250. The mentioned elements may be communicatively coupled to each other with e.g. an internal bus. The memory unit 220 may store portions of computer program code 225 and any other data, and the processing unit 210 may cause the door sensor unit 100 to operate as described above by executing at least some portions of the computer program code 225 stored in the memory unit 220. The processing unit 210 of the door sensor unit 100 may also be at least configured to implement at least some method steps as will be described. The implementation of the method may be achieved by arranging the processing unit 210 to execute at least some portion of computer program code 225 stored in the memory unit 220 causing the processing unit 210, and thus the door sensor unit 100, to implement one or more method steps as will be described. The processing unit 210 is thus arranged to access the memory unit 220 and retrieve and store any information therefrom and thereto. Moreover, the processing unit 210 is configured to control the communication through the communication interface 230 with any external unit. The processing unit 210 may also be configured to control storing of received and delivered data. For sake of clarity, the processor herein refers to any unit suitable for processing information and control the operation of the door sensor unit 100, among other tasks. The operations may also be implemented with a microcontroller solution with embedded software. Similarly, the memory unit 220 is not limited to a certain type of memory only, but any memory type suitable for storing the described pieces of information may be applied in the context of the present invention. The communication unit 230 may be based on one or more known communication technologies, either wired or wireless, in order to exchange pieces of information. The communication unit 230 provides an interface for communication any external units, any databases, and/or any external systems. The communication unit 230 may comprise one or more communication devices, e.g. radio transceiver, antenna, etc. The user interface 240 may comprise I/O devices, such as buttons, keyboard, touch screen, microphone, loudspeaker, display and so on, for receiving input and outputting information.

Above the invention is defined referring to the door sensor unit 100, but the invention relates also to a method for determining the type of the door 102. Next an example of the method according to the invention is described by referring to Figure 3. Figure 3 schematically illustrates the invention as a flow chart.

At a step 310 the door control unit 100 obtains movement data representing movement of the door 102 during the learning period as described above. The movement data may be e.g. an acceleration of the door 102 and/or a speed of the door 102. Preferably, the movement data may be three-dimensional, i.e. three axis, acceleration of the door 102 obtained by the accelerometer, i.e. a three-axis accelerometer, 250 of the door control unit 100.

At a step 320 the door sensor unit 100 further determines the type of the door 102 based on the obtained movement data as described above. The determination of the type of the door 102 at the step 320 comprises a first determination phase 410 and a second determination phase 420. The second determination phase 420 may be performed after the first determination phase 410.

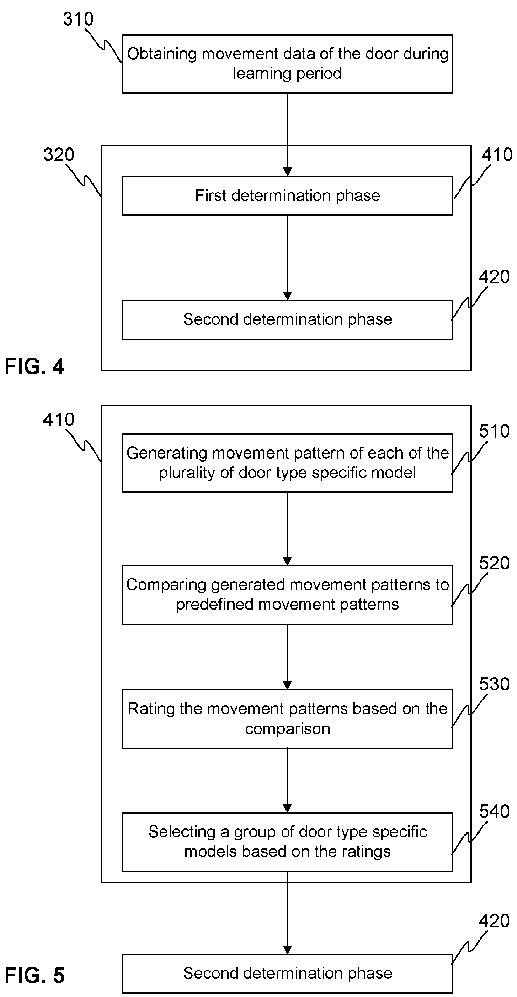

Figure 4 schematically illustrates the determination step 320 of Figure 3 in more detailed manner. As a result of the first determination phase 410 the high-level type of the door 102 may be determined as described above. As a result of the second determination phase 420 the sub-level type of the door 102 may be determined as described above.

Figure 5 schematically illustrates the first determination phase 410, i.e. the determination of the high-level type of the door 102, of the determination step 320 in more detailed manner. At a step of 510 of the first determination step 410 the door sensor unit 100 inputs the obtained movement data into a plurality of door type specific models, i.e. algorithms, to generate a movement pattern of each of the plurality of door type specific model. In other words, the door sensor unit 100 may use the obtained movement data as input data of each of the plurality of door type specific models and a movement pattern is generated as output data of each of the plurality of door type specific models. The plurality of door type specific models may comprise a door type specific model for each type of the door 102, i.e. a plurality of door type specific models for the elevator car door and a plurality of door type specific models for the building/landing door. The plurality of door specific models for the elevator car door may comprise a door type specific model for each sub-level type elevator car door as discussed above. The plurality of door specific models for the building/landing door may comprise a door type specific model for each sub-level type building/landing door as discussed above.

At a step of 520 of the first determination step 410 the door sensor unit 100 compares the generated movement pattern of each of the plurality of door type specific model to predefined movement patterns of the door 102. The predetermined movement patterns of the door 102 may comprise a plurality of predefined elevator car door movement patterns and a plurality of predefined building/landing door movement patterns. Each of the plurality of predefined elevator car door movement patterns represents a movement of the elevator car 104 followed by opening and closing movement of the door 102 or opening and closing movement of the door 102 followed by a movement of the elevator car 104. Each of the plurality of predefined building/landing door movement patterns represents opening and closing movement of the door 102. The plurality of predefined elevator car door movement patterns comprises a predefined movement pattern for each sub-level type elevator car door as discussed above. The plurality of predefined building/landing door movement patterns comprises a predefined movement pattern for each sub-level type building/landing door as discussed above.

At a step of 530 of the first determination step 410 the door sensor unit 100 rates the generated movement patterns of the plurality of door type specific models based on the comparison. The rating of the generated movement patterns of the plurality of door type specific models may e.g. comprise rating the generated movement patterns of the plurality of door type specific models based on that how they match with, i.e. correspond to, the predefined movement patterns. The generated movement patterns of the door type specific models of different sub-types of the elevator car door may be considered to match substantially well with the predefined elevator car door movement patterns. Whereas the generated movement patterns of the door type specific models of different sub-types of the elevator car door may be considered to match substantially poorly with the predefined building/landing door movement patterns. Similarly, the generated movement patterns of the door type specific models of different sub-types of the building/landing door may be considered to match substantially well with the predefined building/landing door movement patterns. Whereas the generated movement patterns of the door type specific models of different sub-types of the building/landing door may be considered to match substantially poorly with the predefined elevator car door movement patterns.

The better a generated movement pattern matches with a predefined movement pattern, the higher rating said generated movement pattern may obtain, i.e. receive, as discussed above. In other words, the generated movement patterns of the door type specific models of the different sub-types of the elevator car door may obtain higher ratings when they are compared to the predefined elevator car door movement patterns than when they are compared to the predefined building/landing door movement patterns. Similarly, the generated movement patterns of the door type specific models of the different sub-types of the building/landing door may obtain higher ratings when they are compared to the predefined building/landing door movement patterns than when they are compared to the predefined elevator car door movement patterns.

At a step of 540 of the first determination step 410 the door sensor unit 100 selects a group of door type specific models based on the ratings of the generated movement patterns of the plurality of door type specific models as discussed above. The selected group determines the high-level type of the door 102. If the selected group comprises door type specific models of the different sub-types of the elevator car door, the high-level type of the door 102 may be determined to be the elevator door. Alternatively, if the selected group comprises door type specific models of the different sub-types of the building/landing door, the high-level type of the door may be determined to be the building/landing door.

The first determination phase 410 may further comprise a determination of a direction the gravity. Alternatively, the second determination phase 420 may comprise the determination of the direction of the gravity. The determination of the direction of the gravity may comprise observing a long-term average of the obtained movement data, e.g. the acceleration of the door 102, or an instantaneous value of the obtained movement data, i.e. the acceleration of the door 102, when the door 102 is determined to be still, i.e. when the accelerometer noise level is low.

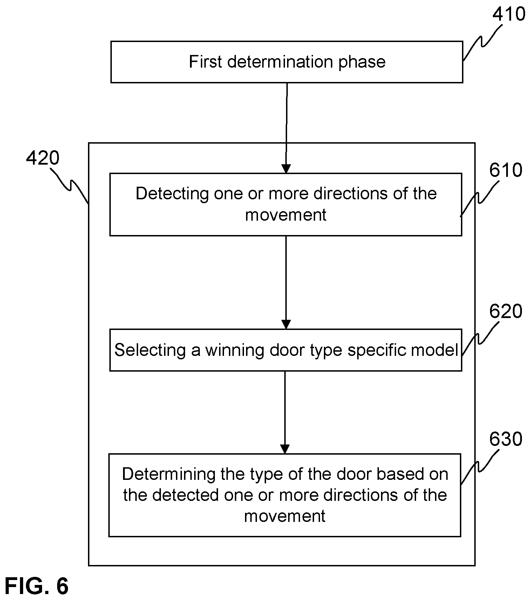

Figure 6 schematically illustrates the second determination phase 420 of the determination step 320 in more detailed manner. At a step of 610 of the second determination step 420 the door sensor unit 100 detects one or more directions of the movement representing movement of the door 102 in each movement pattern of the selected group of the door type specific models as described above. The detecting the one or more directions of the movement at the step 610 may comprise filtering the gravity out from the generated movement patterns of the selected group of the door type specific models. In addition, if the selected group comprises door type specific models of the different sub-types of the elevator car door, the detecting the one or more directions of the movement at the step 610 may comprise filtering the movement of the elevator car 104 out from the generated movement patterns of the selected group of the door type specific models. In other words, after filtering the gravity and the movement of the elevator car 104 out from the generated movement patterns of the selected group of the door type specific models, the remaining filtered movement patterns represents the opening and closing movement of the door 102 in the one or more directions depending on the door type specific model.

At a step of 620 of the second determination step 420 the door sensor unit 100 selects a winning, i.e. an actual, door type specific model by comparing the filtered movement patterns of the selected group of the door type specific models to predefined movement patterns representing opening and closing movement of sub-level door types. The door type specific model whose filtered movement pattern corresponds to the predefined movement pattern representing opening and closing movement of one of the sub-level door type may be selected as the winning door type specific model, i.e. the door type specific model that corresponds to the sub-level type of the door 102 to which the door sensor unit 100 is arranged, as described above.

In addition, according to an example in case that the selected group comprises door type specific models of the different sub-types of the elevator car door, the movement of the elevator car 104 may further be utilized in the selection of the winning door type specific model at the step of 620, e.g. to define that the elevator car door 102 is closed, if the elevator car 104 is moving, and/or that the movement following the movement of the elevator car 104 is opening of the elevator car door 102.

At a step of 630 of the second determination step 420 the door sensor unit 100 determines the type of the door 102, i.e. sub-level type of the door 102, based on the detected one or more directions of the movement of the winning door type specific model. In response to detection of only vertical direction movement, the type of the door 102, i.e. the sub-level type of the door 102, may be determined to be a vertically moving door. Alternatively, in response to detection of only horizontal direction movement, the type of the door 102, i.e. the sub-level type of the door 102, may be determined to be a horizontally moving door. Alternatively, in response to detection of movement having direction normal to a vertical plane, the type of the door 102, i.e. the sub-level type of the door 102, may be determined to be a swing door. Alternatively, in response to detection of horizontal direction movement and movement having direction normal to a vertical plane, the type of the door 102, i.e. the sub-level type of the door 102, may be determined to be a folding door.

The specific examples provided in the description given above should not be construed as limiting the applicability and/or the interpretation of the appended claims. Lists and groups of examples provided in the description given above are not exhaustive unless otherwise explicitly stated.

## Claims

1. A door sensor unit (100) for determining a type of a door (102) to which the door sensor unit (100) is attached, the door sensor unit (100) is configured to:
obtain movement data representing movement of the door (102) during a learning period, and
determine the type of the door (102) based on the obtained movement data, the type of the door (102) comprises a high-level type of the door (102) and sub-level type of the door (102), wherein the high-level type of the door (102) is an elevator car door or a building/landing door, and wherein the sub-level type of the door (102) is a horizontally moving door, a vertically moving door, a swing door, or a folding door,
wherein the determination of the type of the door (102) comprises a first determination phase and a second determination phase,
**characterized in that** the first determination phase comprises that the door sensor unit (100) is configured to:
input the obtained movement data into a plurality of door type specific models to generate a movement pattern of each of the plurality of door type specific model,
compare the generated movement pattern of each of the plurality of door type specific model to predefined movement patterns of the door (102),
rate the movement patterns of the plurality of door type specific models based on the comparison, and
select a group of door type specific models based on the ratings of the movement patterns of the plurality of door type specific models.

2. The door sensor unit (100) according to claim 1, wherein the predetermined movement patterns comprise a plurality of elevator car door movement patterns representing movement of an elevator car (104) followed by opening and closing movement of the door (102) or opening and closing movement of the door (102) followed by movement of an elevator car (104) and a plurality of building/landing door movement patterns representing opening and closing movement of the door (102).

3. The door sensor unit (100) according to claim 1 or 2, wherein the second determination phase comprises that the door sensor unit (100) is configured to:
detect one or more directions of the movement representing movement of the door (102) in each movement pattern of the selected group of door type specific models,
select a winning door type specific model, and
determine the type of the door (100) based on the detected one or more directions of the movement of the movement pattern of the of the winning door type specific model.

4. The door sensor unit (100) according to claim 3, wherein in response to detection of:
only vertical direction, the type of the door (102) is determined to be a vertically moving door,
only horizontal direction, the type of the door (102) is determined to be a horizontally moving door,
direction normal to a vertical plane, the type of the door (102) is determined to be a swing door, or
horizontal direction and direction normal to a vertical plane, the type of the door (102) is determined to be a folding door.

5. The door sensor unit (100) according to any of the preceding claims, wherein the learning period comprises at least one movement cycle, wherein in case of an elevator car door one movement cycle comprises movement of an elevator car (102) followed by opening and closing movement of the door (102) or opening and closing movement of the door (102) followed by movement of an elevator car (104), and in case of a building/landing door one movement cycle comprises opening and closing movement of the door (102).

6. The door sensor unit (100) according to any of the preceding claims, comprising an accelerometer (250) configured to obtain the movement data of the door (102), wherein the movement data is three-dimensional acceleration of the door (102).

7. A method for determining a type of a door (102), the method comprising:
obtaining (310) movement data representing movement of the door during a learning period, and
determining (320) the type of the door based on the obtained movement data, the type of the door (102) comprises a high-level type of the door (102) and sub-level type of the door (102), wherein the high-level type of the door (102) is an elevator car door or a building/landing door, and wherein the sub-level type of the door (102) is a horizontally moving door, a vertically moving door, a swing door, or a folding door,
wherein the step of determining the type of the door comprises a first determination phase (410) and a second determination phase (410),
**characterized in that** the first determination phase (410) comprises:
inputting the obtained movement data into a plurality of door type specific models to generate (510) a movement pattern of each of the plurality of door type specific model,
comparing (520) the generated movement pattern of each of the plurality of door type specific model to predefined movement patterns of the door (102),
rating (530) the movement patterns of the plurality of door type specific models based on the comparison, and
selecting (540) a group of door type specific models based on the ratings of the movement patterns of the plurality of door type specific models.

8. The method according to claim 7, wherein the predetermined movement patterns comprise a plurality of elevator car door movement patterns representing movement of an elevator car (104) followed by opening and closing movement of the door (102) or opening and closing movement of the door (102) followed by movement of an elevator car (104) and a plurality of building/landing door movement patterns representing opening and closing movement of the door (102).

9. The method according to claim 7 or 8, wherein the second determination phase (420) comprises:
detecting (610) one or more directions of the movement representing movement of the door (102) in the movement patterns of the selected group of door type specific models,
selecting (620) a winning door type specific model, and
determining (630) the type of the door based on the detected one or more directions of the movement of movement pattern of the of the winning door type specific model.

10. The method according to claim 9, wherein in response to detection of:
only vertical direction, the type of the door (102) is determined to be a vertically moving door,
only horizontal direction, the type of the door (102) is determined to be a horizontally moving door,
direction normal to a vertical plane, the type of the door (102) is determined to be a swing door, or
horizontal direction and direction normal to a vertical plane, the type of the door (102) is determined to be a folding door.

11. The method according to any of claims 7 to 10, wherein the learning period comprises at least one movement cycle, wherein in case of an elevator car door one movement cycle comprises movement of an elevator car (104) followed by opening and closing movement of the door (102) or opening and closing movement of the door followed by movement of an elevator car (104) and in case of a building/landing door one movement cycle comprises opening and closing movement of the door (102) in case of a building/landing door.

12. The method according to any of claims 7 to 11, wherein the movement data is three-dimensional acceleration of the door (102) obtained by an accelerometer (250).

## Patentansprüche

1. Türsensoreinheit (100) zum Bestimmen eines Typs einer Tür (102), an der die Türsensoreinheit (100) angebracht ist, wobei die Türsensoreinheit (100) konfiguriert ist, zum:
Erfassen von Bewegungsdaten, die die Bewegung der Tür (102) während einer Einlernphase darstellen, und Bestimmen des Typs der Tür (102) basierend auf den erfassten Bewegungsdaten, wobei der Typ der Tür (102) einen übergeordneten Typ der Tür (102) und einen untergeordneten Typ der Tür (102) umfasst, wobei der übergeordnete Typ der Tür (102) eine Aufzugskabinentür oder eine Gebäude-/Etagentür ist und wobei der untergeordnete Typ der Tür (102) eine sich horizontal bewegende Tür, eine sich vertikal bewegende Tür, eine Schwingtür oder eine Falttür ist,
wobei das Bestimmen des Typs der Tür (102) eine erste Bestimmungsphase und eine zweite Bestimmungsphase umfasst,
**dadurch gekennzeichnet, dass** die erste Bestimmungsphase umfasst, dass die Türsensoreinheit (100) konfiguriert ist, zum:
Eingeben der erfassten Bewegungsdaten in eine Vielzahl von türtypspezifischen Modellen, um ein Bewegungsmuster für jedes der Vielzahl von türtypspezifischen Modelle zu erzeugen,
Vergleichen der erzeugten Bewegungsmuster jedes der Vielzahl von türtypspezifischen Modelle mit vordefinierten Bewegungsmustern der Tür (102),
Bewerten der Bewegungsmuster der Vielzahl von türtypspezifischen Modellen basierend auf dem Vergleich, und
Auswählen einer Gruppe von türtypspezifischen Modellen basierend auf den Bewertungen der Bewegungsmuster der Vielzahl von türtypspezifischen Modellen.

2. Türsensoreinheit (100) nach Anspruch 1, wobei die vorgegebenen Bewegungsmuster eine Vielzahl von Bewegungsmustern von Aufzugskabinentüren umfassen, die die Bewegung einer Aufzugskabine (104) darstellen, gefolgt von einer Öffnungs- und Schließbewegung der Tür (102) oder einer Öffnungs- und Schließbewegung der Tür (102), gefolgt von einer Bewegung einer Aufzugskabine (104), sowie eine Vielzahl von Bewegungsmustern von Gebäude-/Etagentüren, die Öffnungs- und Schließbewegungen der Tür (102) darstellen.

3. Türsensoreinheit (100) nach Anspruch 1 oder 2, wobei die zweite Bestimmungsphase umfasst, dass die Türsensoreinheit (100) konfiguriert ist, zum:
Erkennen einer oder mehrerer Bewegungsrichtungen, die die Bewegung der Tür (102) in jedem Bewegungsmuster der ausgewählten Gruppe von türtypspezifischen Modellen darstellen,
Auswählen eines gewinnenden türtypspezifischen Modells und
Bestimmen des Typs der Tür (100) basierend auf einer oder mehreren erkannten Bewegungsrichtungen des Bewegungsmusters des gewinnenden türtypspezifischen Modells.

4. Türsensoreinheit (100) nach Anspruch 3, wobei als Reaktion auf das Erkennen von:
nur der vertikalen Richtung der Typ der Tür (102) als eine sich vertikal bewegende Tür bestimmt wird,
nur der horizontalen Richtung der Typ der Tür (102) als eine sich horizontal bewegende Tür bestimmt wird,
der Richtung senkrecht zu einer vertikalen Ebene der Typ der Tür (102) als Schwingtür bestimmt wird oder
der horizontalen Richtung und einer Richtung senkrecht zu einer vertikalen Ebene der Typ der Tür (102) als Falttür bestimmt wird.

5. Türsensoreinheit (100) nach einem der vorstehenden Ansprüche, wobei die Einlernphase mindestens einen Bewegungszyklus umfasst, wobei im Falle einer Aufzugskabinentür ein Bewegungszyklus entweder die Bewegung einer Aufzugskabine (102), gefolgt von der Öffnungs- und Schließbewegung der Tür (102), oder die Öffnungs- und Schließbewegung der Tür (102), gefolgt von der Bewegung einer Aufzugskabine (104), umfasst, und im Falle einer Gebäude-/Etagentür ein Bewegungszyklus die Öffnungs- und Schließbewegung der Tür (102) umfasst.

6. Türsensoreinheit (100) nach einem der vorstehenden Ansprüche, umfassend einen Beschleunigungsmesser (250), der konfiguriert ist, um die Bewegungsdaten der Tür (102) zu erfassen, wobei es sich bei den Bewegungsdaten um die dreidimensionale Beschleunigung der Tür (102) handelt.

7. Verfahren zum Bestimmen eines Typs einer Tür (102), das Verfahren umfassend:
Erfassen (310) von Bewegungsdaten, die die Bewegung der Tür während einer Einlernphase darstellen, und
Bestimmen (320) des Typs der Tür basierend auf den erfassten Bewegungsdaten, wobei der Typ der Tür (102) einen übergeordneten Typ der Tür (102) und einen untergeordneten Typ der Tür (102) umfasst, wobei der übergeordnete Typ der Tür (102) eine Aufzugskabinentür oder eine Gebäude-/Etagentür ist und wobei der untergeordnete Typ der Tür (102) eine sich horizontal bewegende Tür, eine sich vertikal bewegende Tür, eine Schwingtür oder eine Falttür ist,
wobei der Schritt der Bestimmung des Typs der Tür eine erste Bestimmungsphase (410) und eine zweite Bestimmungsphase (410) umfasst,
**dadurch gekennzeichnet, dass** die erste Bestimmungsphase (410) Folgendes umfasst:
Eingeben der erfassten Bewegungsdaten in eine Vielzahl von türtypspezifischen Modellen, um ein Bewegungsmuster für jedes der Vielzahl von türtypspezifischen Modelle zu erzeugen (510),
Vergleichen (520) der erzeugten Bewegungsmuster jedes der Vielzahl von türtypspezifischen Modelle mit vordefinierten Bewegungsmustern der Tür (102),
Bewerten (530) der Bewegungsmuster der Vielzahl von türtypspezifischen Modellen basierend auf dem Vergleich, und
Auswählen (540) einer Gruppe von türtypspezifischen Modellen basierend auf den Bewertungen der Bewegungsmuster der Vielzahl von türtypspezifischen Modellen.

8. Verfahren nach Anspruch 7, wobei die vorgegebenen Bewegungsmuster eine Vielzahl von Bewegungsmustern von Aufzugskabinentüren umfassen, die die Bewegung einer Aufzugskabine (104) darstellen, gefolgt von einer Öffnungs- und Schließbewegung der Tür (102) oder einer Öffnungs- und Schließbewegung der Tür (102), gefolgt von einer Bewegung einer Aufzugskabine (104), sowie eine Vielzahl von Bewegungsmustern von Gebäude-/Etagentüren, die Öffnungs- und Schließbewegungen der Tür (102) darstellen.

9. Verfahren nach Anspruch 7 oder 8, wobei die zweite Bestimmungsphase (420) Folgendes umfasst:
Erkennen (610) einer oder mehrerer Bewegungsrichtungen, die die Bewegung der Tür (102) in den Bewegungsmustern der ausgewählten Gruppe von türtypspezifischen Modellen darstellen,
Auswählen (620) eines gewinnenden türtypspezifischen Modells und
Bestimmen (630) des Typs der Tür basierend auf einer oder mehreren erkannten Bewegungsrichtungen des Bewegungsmusters des gewinnenden türtypspezifischen Modells.

10. Verfahren nach Anspruch 9, wobei als Reaktion auf das Erkennen von:
nur der vertikalen Richtung der Typ der Tür (102) als eine sich vertikal bewegende Tür bestimmt wird,
nur der horizontalen Richtung der Typ der Tür (102) als eine sich horizontal bewegende Tür bestimmt wird,
der Richtung senkrecht zu einer vertikalen Ebene der Typ der Tür (102) als Schwingtür bestimmt wird oder
der horizontalen Richtung und einer Richtung senkrecht zu einer vertikalen Ebene der Typ der Tür (102) als Falttür bestimmt wird.

11. Verfahren nach einem der Ansprüche 7 bis 10, wobei die Einlernphase mindestens einen Bewegungszyklus umfasst, wobei im Falle einer Aufzugskabinentür ein Bewegungszyklus die Bewegung einer Aufzugskabine (104) umfasst, gefolgt von der Öffnungs- und Schließbewegung der Tür (102) oder einer Öffnungs- und Schließbewegung der Tür, gefolgt von der Bewegung einer Aufzugskabine (104), und wobei im Falle einer Gebäude-/Etagentür ein Bewegungszyklus die Öffnungs- und Schließbewegung der Tür (102) im Falle einer Gebäude-/Etagentür umfasst.

12. Verfahren nach einem der Ansprüche 7 bis 11, wobei es sich bei den Bewegungsdaten um die dreidimensionale Beschleunigung der Tür (102) handelt, die mittels eines Beschleunigungsmessers (250) erfasst wird.

## Revendications

1. Unité de capteur de porte (100) permettant de déterminer un type d'une porte (102) à laquelle l'unité de capteur de porte (100) est fixée, l'unité de capteur de porte (100) est configurée pour :
obtenir des données de mouvement représentant un mouvement de la porte (102) pendant une période d'apprentissage, et
déterminer le type de la porte (102) en fonction des données de mouvement obtenues, le type de la porte (102) comprenant un type de haut niveau de la porte (102) et un type de sous-niveau de la porte (102), dans laquelle le type de haut niveau de la porte (102) est une porte de cabine d'ascenseur ou une porte de bâtiment/palier, et dans laquelle le type de sous-niveau de la porte (102) est une porte à déplacement horizontal, une porte à déplacement vertical, une porte battante ou une porte pliante,
dans laquelle la détermination du type de la porte (102) comprend une première phase de détermination et une seconde phase de détermination,
**caractérisée en ce que** la première phase de détermination consiste **en ce que** l'unité de capteur de porte (100) est configurée pour :
entrer les données de mouvement obtenues dans une pluralité de modèles spécifiques au type de porte pour générer un schéma de mouvement de chacun parmi la pluralité de modèles spécifiques au type de porte,
comparer le schéma de mouvement généré de chacun parmi la pluralité de modèles spécifiques au type de porte à des schémas de mouvement prédéfinis de la porte (102),
évaluer les schémas de mouvement de la pluralité de modèles spécifiques au type de porte en fonction de la comparaison, et
sélectionner un groupe de modèles spécifiques au type de porte en fonction des évaluations des schémas de mouvement de la pluralité de modèles spécifiques au type de porte.

2. Unité de capteur de porte (100) selon la revendication 1, dans laquelle les schémas de mouvement prédéterminés comprennent une pluralité de schémas de mouvement de porte de cabine d'ascenseur représentant un mouvement d'une cabine d'ascenseur (104) suivi d'un mouvement d'ouverture et de fermeture de la porte (102) ou d'un mouvement d'ouverture et de fermeture de la porte (102) suivis d'un déplacement d'une cabine d'ascenseur (104), et une pluralité de schémas de mouvement de porte de bâtiment/palier représentant un mouvement d'ouverture et de fermeture de la porte (102).

3. Unité de capteur de porte (100) selon la revendication 1 ou 2, dans laquelle la seconde phase de détermination consiste en ce que l'unité de capteur de porte (100) est configurée pour :
détecter une ou plusieurs directions du mouvement représentant un mouvement de la porte (102) dans chaque schéma de mouvement du groupe sélectionné de modèles spécifiques au type de porte,
choisir un modèle spécifique au type de porte gagnant, et
déterminer le type de la porte (100) en fonction de ladite ou desdites directions détectées du mouvement du schéma de mouvement du modèle spécifique au type de porte gagnant.

4. Unité de capteur de porte (100) selon la revendication 3, dans laquelle en réponse à la détection de :
une direction verticale uniquement, le type de la porte (102) est déterminé comme étant une porte à déplacement vertical,
une direction horizontale uniquement, le type de la porte (102) est déterminé comme étant une porte à déplacement horizontal,
une direction perpendiculaire à un plan vertical, le type de la porte (102) est déterminé comme étant une porte battante, ou
une direction horizontale et une direction perpendiculaire à un plan vertical, le type de la porte (102) est déterminé comme étant une porte pliante.

5. Unité de capteur de porte (100) selon l'une quelconque des revendications précédentes, dans laquelle la période d'apprentissage comprend au moins un cycle de mouvement, dans laquelle dans le cas d'une porte de cabine d'ascenseur, un cycle de mouvement comprend un mouvement d'une cabine d'ascenseur (102) suivi d'un mouvement d'ouverture et de fermeture de la porte (102) ou d'un mouvement d'ouverture et de fermeture de la porte (102) suivi d'un mouvement d'une cabine d'ascenseur (104), et dans le cas d'une porte de bâtiment/palier, un cycle de mouvement comprend un mouvement d'ouverture et de fermeture de la porte (102).

6. Unité de capteur de porte (100) selon l'une quelconque des revendications précédentes, comprenant un accéléromètre (250) configuré pour obtenir les données de mouvement de la porte (102), dans laquelle les données de mouvement correspondent à l'accélération tridimensionnelle de la porte (102).

7. Procédé permettant de déterminer un type d'une porte (102), le procédé comprenant :
l'obtention (310) de données de mouvement représentant un mouvement de la porte pendant une période d'apprentissage, et
la détermination (320) du type de la porte en fonction des données de mouvement obtenues, le type de la porte (102) comprenant un type de haut niveau de la porte (102) et un type de sous-niveau de la porte (102), dans lequel le type de haut niveau de la porte (102) est une porte de cabine d'ascenseur ou une porte de bâtiment/palier, et dans lequel le type de sous-niveau de la porte (102) est une porte à déplacement horizontal, une porte à déplacement vertical, une porte battante ou une porte pliante,
dans lequel l'étape consistant à déterminer le type de la porte comprend une première phase de détermination (410) et une seconde phase de détermination (410),
**caractérisé en ce que** la première phase de détermination (410) comprend :
l'entrée de données de mouvement obtenues dans une pluralité de modèles spécifiques au type de porte pour générer (510) un schéma de mouvement de chacun parmi la pluralité de modèles spécifiques au type de porte,
la comparaison (520) du schéma de mouvement généré de chacun parmi la pluralité de modèles spécifiques au type de porte à des schémas de mouvement prédéfinis de la porte (102),
l'évaluation (530) des schémas de mouvement de la pluralité de modèles spécifiques au type de porte en fonction de la comparaison, et
le choix (540) d'un groupe de modèles spécifiques au type de porte en fonction des évaluations des schémas de mouvement de la pluralité de modèles spécifiques au type de porte.

8. Procédé selon la revendication 7, dans lequel les schémas de mouvement prédéterminés comprennent une pluralité de schémas de mouvement de porte de cabine d'ascenseur représentant un mouvement d'une cabine d'ascenseur (104) suivi d'un mouvement d'ouverture et de fermeture de la porte (102) ou d'un mouvement d'ouverture et de fermeture de la porte (102) suivis d'un déplacement d'une cabine d'ascenseur (104), et une pluralité de schémas de mouvement de porte de bâtiment/palier représentant un mouvement d'ouverture et de fermeture de la porte (102).

9. Procédé selon la revendication 7 ou 8, dans lequel la seconde phase de détermination (420) comprend :
la détection (610) d'une ou plusieurs directions du mouvement représentant un mouvement de la porte (102) dans les schémas de mouvement du groupe choisi de modèles spécifiques au type de porte,
la sélection (620) d'un modèle spécifique au type de porte gagnant, et
la détermination (630) du type de la porte en fonction de l'une ou plusieurs directions détectées du mouvement de schéma de mouvement du modèle spécifique au type de porte gagnant.

10. Procédé selon la revendication 9, dans lequel en réponse à la détection de :
une direction verticale uniquement, le type de la porte (102) est déterminé comme étant une porte à déplacement vertical,
une direction horizontale uniquement, le type de la porte (102) est déterminé comme étant une porte à déplacement horizontal,
une direction perpendiculaire à un plan vertical, le type de la porte (102) est déterminé comme étant une porte battante, ou
une direction horizontale et une direction perpendiculaire à un plan vertical, le type de la porte (102) est déterminé comme étant une porte pliante.

11. Procédé selon l'une quelconque des revendications 7 à 10, dans lequel la période d'apprentissage comprend au moins un cycle de mouvement, dans lequel dans le cas d'une porte de cabine d'ascenseur, un cycle de mouvement comprend un mouvement d'une cabine d'ascenseur (104) suivi d'un mouvement d'ouverture et de fermeture de la porte (102) ou d'un mouvement d'ouverture et de fermeture de la porte suivi d'un mouvement d'une cabine d'ascenseur (104) et dans le cas d'une porte de bâtiment/palier, un cycle de mouvement comprend un mouvement d'ouverture et de fermeture de la porte (102) dans le cas d'une porte de bâtiment/palier.

12. Procédé selon l'une quelconque des revendications 7 à 11, dans lequel les données de mouvement correspondent à l'accélération tridimensionnelle de la porte (102) obtenue par un accéléromètre (250).
